(19) Europäisches Patentamt
European Patent Office
Office européen des brevets

(11) **EP 4 266 791 B1**

(12) **EUROPEAN PATENT SPECIFICATION**

(45) Date of publication and mention
of the grant of the patent:
**26.02.2025 Bulletin 2025/09**

(21) Application number: **22169200.7**

(22) Date of filing: **21.04.2022**

(51) International Patent Classification (IPC):
**H04W 72/20** (2023.01)    **H04W 72/542** (2023.01)
**H04W 74/0816** (2024.01)

(52) Cooperative Patent Classification (CPC):
**H04W 72/542; H04W 72/20;** H04W 4/44;
H04W 4/46; H04W 74/0816

(54) **METHODS AND APPARATUSES TO ENABLE SENSING IN RADIO COMMUNICATION NETWORKS**

VERFAHREN UND VORRICHTUNGEN ZUR AKTIVIERUNG DER ERFASSUNG IN FUNKKOMMUNIKATIONSNETZEN

PROCÉDÉS ET APPAREILS PERMETTANT LA DÉTECTION DANS DES RÉSEAUX DE COMMUNICATION RADIO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.10.2023 Bulletin 2023/43**

(73) Proprietor: **Robert Bosch GmbH**
**70442 Stuttgart (DE)**

(72) Inventors:
• **Suer, Marie-Theres**
**38102 Braunschweig (DE)**
• **Hassan, Khaled Shawky**
**30880 Laatzen (DE)**
• **Ramos Cantor, Oscar Dario**
**31135 Hildesheim (DE)**
• **Hofmann, Frank**
**31139 Hildesheim (DE)**

(56) References cited:
**WO-A1-2020/033226**    **US-A1- 2021 076 367**
**US-A1- 2021 410 129**

**Description**

Prior Art

Communication systems and sensing systems, especially radar, are known to be separate systems.

US 2021/076367 A1 discloses a method and an apparatus according to the preamble of claim 1.

WO 2020/033226 A1 discloses a system for determining whether sidelink resources of a sidelink radio bearer are available. The system is also for reserving resources of any number of sidelink radio bearers for transmission of periodic data.

US 2021/410129 A1 discloses a system for unicast and/or multicast link establishment and maintenance. A wireless transmit and receive unit sends a link establishment request broadcast message. The wireless transmit receive unit receives a link establishment response broadcast message and a connectivity report.

Disclosure of the Invention

The invention is as defined in method claim 1.

Data service requirements of applications differ over time or different applications. In addition, the sensing performance of the system changes over time according to QoSe because of physical effects as interference or obstruction. Advantageously, the method enables Integrated Communication and Sensing. The impending spectrum congestion as well as new features and possibly lower costs when combining sensing and data communication systems in a common approach are possible.

Usage of too many time-frequency resources for sensing resulting in unnecessarily high performance and a waste of scarce resources that could otherwise be used for communication services are avoided. Radio resources can be distributed in a coordinated manner between Communication and Sensing functionality to achieve the needed QoS and QoSe

Advantageously, a common waveform can be used for the at least one radio channel for data communication and sensing. However, since the radio characteristics for data communication and sensing are significantly different, the sensing quality requirement is introduced in addition to the data service quality requirement in order to adaptively map the data flow and sensing function accordingly for both data and sensing coexist.

Depending on locally different situations, sensing quality requirements can outrange data service quality requirements and vice versa. For example, at a road junction or a parking lodge, there could be a strong need to enable radar-like sensing for each car. As the radio resource consumption of the radar-like sensing in terms of time and frequency could be large, some data services could be reduced in terms of radio resource consumption or even blocked in favor of the sensing functions.

Advantageously, the configuration of the at least one radio channel is configured. That is, the radio domain adapts its transmission and reception capabilities based on the monitors requirements for data communication and sensing.

An advantageous example is characterized in mapping at least one data service requirement of a first magnitude to the at least one data service quality requirement of a common magnitude; and mapping at least one sensing requirement of a second magnitude to the at least one at least one sensing quality requirement of the common magnitude.

Advantageously, the quality requirements for data services and sensing are based on the common magnitude. This makes it easy for the scheduling decision to compare the types of quality requirements. In particular, the determination of the configuration benefits as a common interface is provided for handling both requirements of data services and sensing.

An advantageous example is characterized in that the at least one configuration of the at least one radio channel comprises: a partitioned configuration, a plurality of the allocated radio resources of the associated partitioned radio channel are exclusively reserved for data transmission, wherein another plurality of the allocated radio resources of the associated partitioned radio channel are exclusively reserved for the transport of sensing signals.

Advantageously, the first configuration enables that the first radio channel is divided between data services and sensing services.

An advantageous example is characterized in that the at least one configuration of the at least one radio channel comprises: a data transport configuration, a plurality of the allocated radio resources of the associated data transport radio channel are exclusively reserved for data transmission, wherein no radio resources of the associated data transport radio channel are exclusively reserved for the transport of sensing signals.

Advantageously, the data configuration prefers data over sensing in order to provide the required quality of data service.

An advantageous example is characterized in that the at least one configuration of the at least one radio channel comprises: a sensing transport configuration, no radio resources of the associated sensing radio channel are exclusively reserved for data transmission, wherein a plurality of radio resources of the associated sensing radio channel are exclusively reserved for the transport of sensing signals.

Advantageously, the sensing configuration prefers sensing over data.

An advantageous example is characterized in selecting one frequency range for the data transport radio channel and the sensing radio channel.

Advantageously, the concatenated frequency range can be used for sensing and data transmission at the same time.

An advantageous example is characterized in selecting a first frequency range for the data transport radio channel; and selecting a second frequency range for the sensing radio channel.

Advantageously, the determination of the configuration and the mapping can take into consideration that some frequency ranges are better suited for sensing. Accordingly, the better-suited frequency range is selected to configure and use a radio channel there for sensing.

Advantageously, the determined ratio enables a corresponding split of the available radio resources.

As sensing can benefit from certain arrangements of the sensing signals in certain frequencies and benefits from certain time patterns, the determination of the radio resources for sensing prior to the determination of radio resources for data communication is advantageous.

An advantageous example is characterized in obtaining at least a part of the at least one configuration from a look-up table based on the determined ratio.

Advantageously, the look-up table provides pre-configured parts of the at least on configuration.

An advantageous example is characterized in comparing an amount of available radio resources with an expected amount of radio resources, which is based on the at least one data service quality requirement and based on at least one sensing quality requirement; and wherein the determination of the at least one configuration of the at least one radio channel is based on the comparison. Advantageously, the configuration of the radio channel matches with the requirements for data transmission and sensing.

An advantageous example is characterized in comparing the at least one data service quality requirement with the at least one sensing quality requirement; and wherein the determination of the at least one configuration of the at least one radio channel is based on the comparison.

Advantageously, the configuration of the radio channel is determined based on a direct comparison of the requirements for sensing and data transmission.

The invention is further as defined in apparatus claim 11.

An advantageous example is characterized in that the apparatus of claim 13 is adapted to conduct the method according to one of claims 1 to 10.

Figure 1     depicts a control unit in a schematic bock diagram;

Figure 2     depicts a mapping scheme;

Figure 3     depicts how QoS flows and sensing request are handled;

Figure 4     depicts a determination of a configuration of at least one radio channel;

Figure 5     depicts a flow diagram being operated on a radio terminal or radio access node;

Figure 6     depicts a comparison of the present radio wave generation with the prior art; and

Figure 7     depicts use cases from the automotive domain.

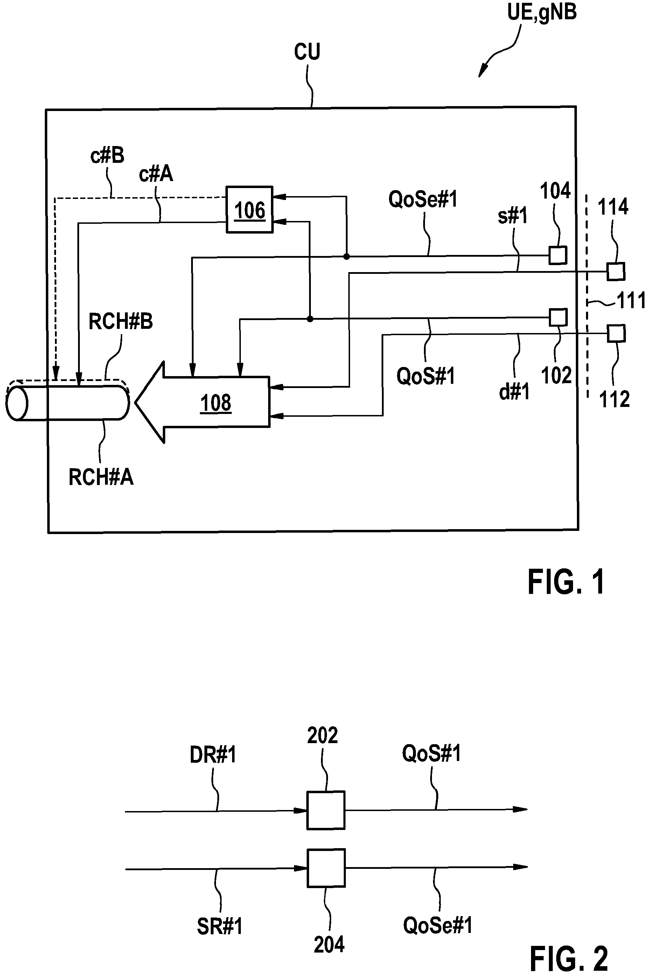

Figure 1 depicts a schematic block diagram for operating an apparatus UE, gNB. According to an example, the apparatus UE is a radio terminal of a communications network or a part thereof like a circuitry or a computer entity.

According to another example, the apparatus gNB is a radio access node of a communications network or a part thereof like a circuitry or a computer entity. The apparatus UE, gNB can take part in a cellular-based radio communications network or an adhoc radio communications network or both.

The control unit CU comprises monitoring means 102 configured to monitor a data service quality requirement QoS#1 that is associated with a data flow d#1 for data communication.

The control unit CU comprises monitoring means 104 configured to monitor a sensing quality requirement QoSe#1 that is associated with a sensing function s#1 for sensing of a physical environment parameter of a physical environment.

The control unit CU comprises mapping means 108 configured to map at least one of the data flow d#1 associated with the data service quality requirement QoS#1 and the sensing function s#1 associated with the sensing quality requirement QoSe#1 to a radio channel RCH#B, RCH#A based on the monitored data service quality requirement QoS#1 and based on the monitored sensing quality requirement QoSe#1.

QoS can be also termed quality of a data communication service with the primary aim to transmit data. QoS in data communication terms comprises or relies on different parameters describing the performance or measurement results of the data service as packet error rate, throughput, availability and latency. An actual performance can be compared with the expected requirement QoS.

QoSe can be also termed quality of a sensing service or a sensing request with the primary aim to obtain information about the physical environment of the respective apparatus UE, gNB. QoSe incorporates requirement of sensing and positioning. QoSe in terms of sensing comprises different parameters describing the performance or measurement results of the sensing service as detection range, range accuracy, angular resolution and velocity accuracy. An actual performance can be compared with the expected requirement QoSe.

After the mapping, the radio resources of the radio channel RCH#A, RCH#B are allocated and the data signals and/or the sensing signals are transmitted via a common carrier waveform.

As indicated by the dashed line 111, according to a block 112, the data flow d#1 to be transmitted over at least one of the channels RCH#A, RCH#B is made available at the apparatus UE, gNB. According to another example, the data flow d#1 is available at a remote entity like a radio terminal or a radio access node different from the apparatus UE, gNB.

As indicated by the dashed line 111, according to a block 114, the sensing signals to be transmitted over at least one of the radio channels RCH#A, RCH#B are associated with the sensing function s#1. The sensing function s#1 is determined at the apparatus UE, gNB. According to another example, the sensing function s#1 is generated at a remote entity like a radio terminal or a radio access node different from the apparatus UE, gNB. In other words, the sensing function can be generated locally on the side of a radio terminal or a gNB based on provided sensing parameters or a provided sensing type. Based on the sensing function s#1, the sensing signals are transmitted and received at the respective apparatus UE, gNB.

In order to achieve both, QoS and QoSe, a control unit CU containing a QoS/QoSe filtering and mapping is deployed. CU is responsible for multiplexing QoS data packets/flow with sensing signals/pilots, for a requested sensing service. This may result either in multiplexing data and sensing on the same time-frequency resources, i.e., either in time, frequency, or both or segregating data and sensing on different radio channels. The decision is dependent on multiplexing criteria.

Sensing in this description refers to the transmission and reception of sensing signals via a radio channel that can be shared with data communication. The transmission and reception of sensing signals - the sensing - is associated with a sensing function. The sensing function initiates the configuration and transmission of sensing signals in the radio domain.

Figure 2 depicts a schematic block diagram. Determining means 106 is configured to determine a configuration c#A, c#B of the radio channel RCH#A, RCH#B based on the monitored data service quality requirement QoS#1 and based on the monitored sensing quality requirement QoSe#1. The determination of the configuration c#A, c#B of the channel RCH#A, RCH#B is optional or is less frequently conducted than the mapping 108.

Mapping means 202 is configure to map data service requirement DR#1 of a first magnitude to the data service quality requirement QoS#1 of a common magnitude.

Mapping means 204 is configured to map a sensing requirement SR#1 of a second magnitude to the sensing quality requirement QoSe#1 of the common magnitude.

For example, the mapping 202 is used to map the data service requirement DR#1 to QoS#1 in values from 0 to N, where, e.g., 0 is the highest priority and N is the lowest or vice versa. Examples for a type of the data service requirement DR#1 comprise at least one of: packet error rate, throughput, availability, and latency. For each type of data service requirement DR#1, there is a different mapping 202.

For example, the mapping 204 is used to map the sensing requirement SR#1 to QoS#1 in values from 0 to N, where, e.g., 0 is the highest priority and N is the lowest or vice versa. Examples for a type of the sensing requirement SR#1 comprise at least one of: detection range, range accuracy, angular resolution, and velocity accuracy. For each type of sensing requirement SR#1, there is a different mapping 204.

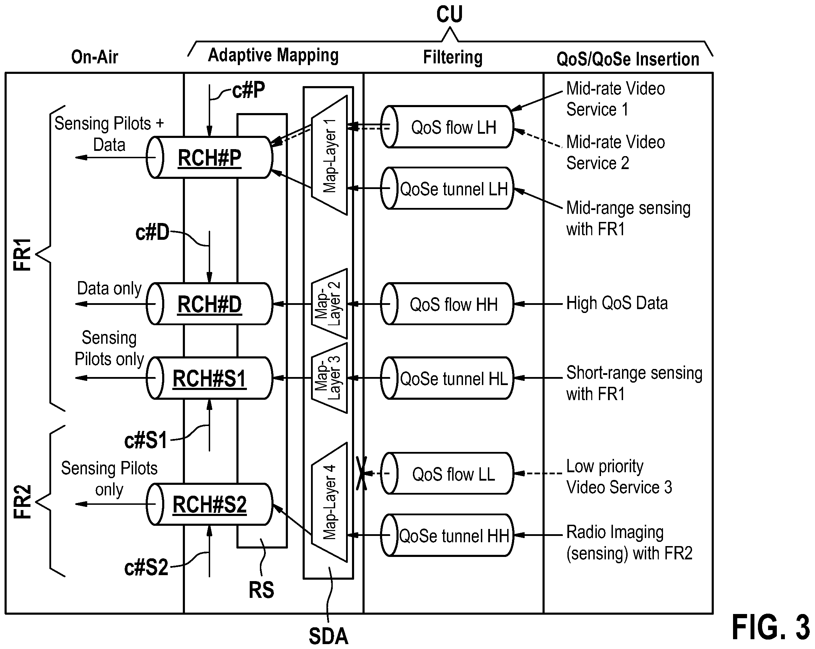

Figure 3 depicts schematically, how radio channels are being configured and how data flows, in particular QoS flows, and sensing functions are mapped to the configured radio channels. According to an example, the configuration of the at least one radio channel comprises or is: a partitioned configuration c#P, wherein a plurality of the allocated radio resources of the associated partitioned radio channel RCH#P are exclusively reserved for data transmission, and wherein another plurality of the allocated radio resources of the associated partitioned radio channel are exclusively reserved for the transport of sensing signals.

According to an example, the configuration of the at least one radio channel comprises or is: a data transport configuration c#D, wherein a plurality of the allocated radio resources of the associated data transport radio channel RCH#D are exclusively reserved for data transmission, and wherein no radio resources of the associated data transport radio channel RCH#D are exclusively reserved for the transport of sensing signals.

According to an example, the configuration of the at least one radio channel comprises or is: a sensing transport configuration c#S1, c#S2, wherein no radio resources of the associated sensing radio channel RCH#S1, RCH#S2 are exclusively reserved for data transmission, and wherein a plurality of radio resources of the associated sensing radio channel RCH#S1, RCH#S2 are exclusively reserved for the transport of sensing signals.

According to an example, selecting means are configured to select one frequency range FR1 for the data transport radio channel RCH#D and the sensing radio channel RCH#S1.

According to an example, the selecting means are configure to select a first frequency range FR1 for the data transport radio channel RCH#D; and to select selecting a second frequency range FR2 for the sensing radio channel RCH#S2.

The control unit CU multiplexes QoS flows and a QoSe signaling in the same channel, herewith deciding the portion of bandwidth and/or time for each of the services, i.e., Data and Sensing, according to at least one multiplexing equation 1 or 2 explained below.

The control unit CU adaptively controls the flow of both signals data, sensing continuously over time based on possible variation in QoS/QoSe values and or data-flow rate. The control unit CU segregates data services and sensing signals / sensing pilots on different channel based on the available radio resources, the radio resources quality based on measurements, and the QoS/QoSe level. The control unit CU admits or blocks data flows and/or sensing services per channel/resource.

In figure 3, for simplicity, the Quality of Service/Sensing values are ranked from low to high as follows: LL, LH, HL, HH low-low, low-high, high-low, high-high. Then QoS can be sorted in this order assuming LL < LH in QoS measure.

In figure 3, data service packets are inserted with a QoS identification field. Additionally, Sensing service requests are inserted with an identifier indicating the sensing requirement, e.g., QoSe indicator. Inserted services data, sensing are filtered in QoS data flows and QoSe tunnels. Later, an adaptive mapping takes place, where QoS flows and/or QoSe tunnels are multiplexed 1:1, many:1 into digital radio resources/channels/bearers. The output of each digital channel can be: sensing pilots/signals only, data with its channel estimation pilots, or data + sensing pilots in the same time and/or frequency resources. The latest option can be further split into different solutions in which the same waveform is used for sensing and communication or different waveforms.

The QoSe tunnels for QoSe are intended for separated sensing service requests. So the QoSe tunnels represent a dedicated separate pathway for the sensing services.

QoS data flows and QoSe sensing service requests are inserted to a filter, which filters the different data flows/sensing functions according to their QoS and QoSe values identified. The filter may concatenate services of same or equivalent QoS or QoSe values in same flows and tunnels, respectively. These filtered QoS flows and QoSe tunnels are mapped to the different available resources using a mapping function, wherein the mapping admits sensing and/or data either multiplexing or segregation.

The sensing and data mapping protocol layer is responsible for: Admitting QoS flow and QoSe tunnel to same bearer/channel if both values can fit to the available resource; Admitting QoS flow or QoSe tunnel in separate bearers/channels that fits their required values and the available resource; and Blocking one flow or tunnel and admit the other based on the QoS/QoSe of the blocked value vs available resource.

The adaptive mapping comprises two layers: SDA mapping sublayer SDA: Sensing and Data Adaption and a resource split sublayer RS. The SDA mapping layer only selects the radio channel, for example from 1 to M that fits the QoS/QoSe, i.e., in sense of quality requirement. For example, if QoS and/or QoSe are very high, the flow/service cannot be conducted with radio channel RCH#D, RCH#S1, RCH#S2, but with RCH#P.

Resource splitting of the layer RS is conducted after the flows/"tunnels" are mapped to a radio resource; the resource split only indicates the ratio of data and sensing pilots/signals carried on the said physical channel, e.g., radio resource 1.

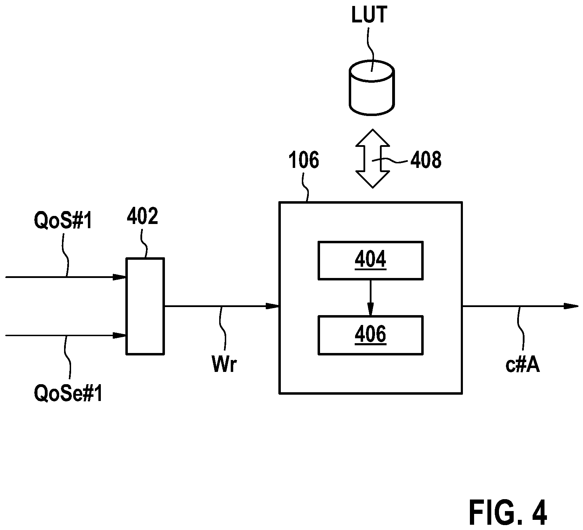

Figure 4 depicts a schematical block diagram. Determining means 402 are configured to determine a ratio W_r based on the at least one data service quality requirement QoS#1 and based on the at least one sensing quality requirement QoSe#1. The determination 106 of the at least one configuration c#A comprises: Determining means 404 are configure do determine a plurality of radio resources as part of the at least one configuration c#A for transporting sensing signals associated with the sensing function s#1 based on the ratio W_r. Determining means 406 are configured to determine, especially after determining 404 the plurality of radio resources for transporting sensing signals, another plurality of radio resources as part of the at least one configuration c#A for transporting data associated with the data flow d#1.

Obtaining means 408 are configured to obtain at least a part of the at least one configuration c#A from a look-up table LUT based on the determined ratio W_r. For example, the look-up table LUT comprises split criteria for different ratios W_r, frequency patterns different for data and sensing, time patterns different for data and sensing, code patterns different for data and sending and so on. According to an example, each entry of the look-up table LUT comprises a quantized value of the ratio W_r.

According to an example, based on the QoS of the data and the QoSe of the sensing that will be multiplexed in a single channel, and based on the available resources of this channel, multiplexing ratio is decided based on the following equations 1 and 2:

$$sensing\_resources = f(W\_r, \text{available resources}) \qquad (1)$$

$$data\_resources = Total\_resources - sensing\_resources \qquad (2)$$

The ratio W_r = QoSe/QoS is the ratio between the sensing QoSe and the data QoS. The function f determines the sensing radio resources based on the ratio and based on the available radio resources. For example, if QoSe = QoS, then W_r =1. In this case, resource can be split equally between data and sensing pilot or base on a split criteria stored in a lockup table. If a lookup table is used, the entry to the table could be a quantized value of W_r.

An alternative uses the same resources for communication and sensing to influence QoS and QoSe. But the resource have different influence on both.

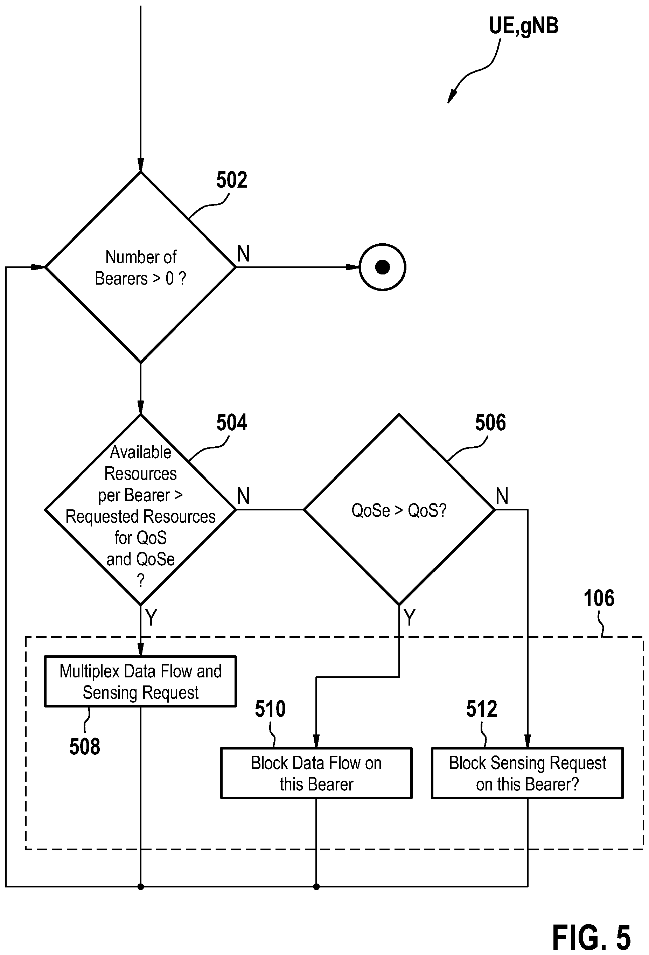

Figure 5 depicts a flow diagram for determining the configuration of the radio channel and for mapping. The function controls the admit/block/multiplex of services to channel/bearer. According to step 502, the process loops through the available radio bearers. If there is a radio bearer that has not been processed, the procedure continues with step 504.

Comparing means 504 are configured to compare an amount of available radio resources with an expected amount of radio resources, which is based on the data service quality requirement QoS#1 and based on a sensing quality requirement QoSe#1, wherein the determination 106 of the configuration of the radio channel RCH#A, RCH#B is based on the comparison.

Comparing means 506 are configured to compare the data service quality requirement QoS#1 with the sensing quality requirement QoSe#1, wherein the determination 106 of the configuration of the radio channel RCH#A, RCH#B is based on the comparison 506.

For example, if sufficient radio resources are available, then the data flow and the sensing function are multiplexed in step 508 on a radio channel associated with the radio bearer.

According to another example, the data flow is blocked in step 510 if the quality of service requirement QoS is above the quality of sensing requirement QoSe and there are not sufficient available radio resources of the radio channel to attend the provided QoS and QoSe at the same time.

According to another example, the sensing function is blocked in step 512 if the quality of service requirement QoS is below the quality of sensing requirement QoSe and there are not sufficient available radio resources of the radio channel to attend the provided QoS and QoSe at the same time.

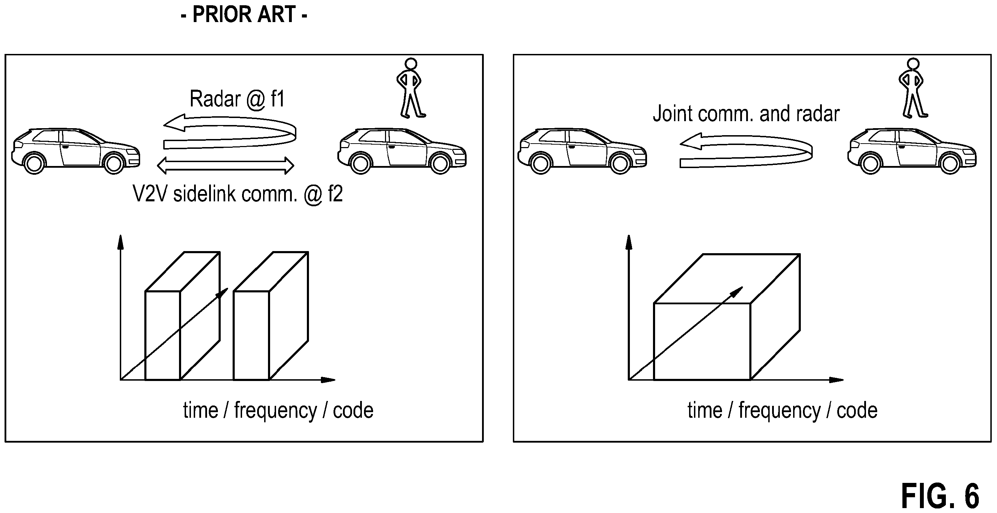

Figure 6 illustrates on the left hand side the prior art communication with separated radar and V2V communication. In particular, the transmitted signals differ in time, frequency, and code.

Throughout this description, the right hand side illustration applies. That is, both sensing functions and data communication is fused on a common radio resource grid, which is defined, for example, by the dimensions time, frequency and code. The use of the common radio resource grid has several advantages, inter alia, that a reduced number functional units have to be provided which reduces costs and simultaneously provides more functionalities like data communication and sensing.

Of course, the field of application of the mechanisms described here does not extend to the automotive environment. Rather, the methods presented here can also be used in an indoor environment for localization and sensing of the physical environment as well as for data communication there. Use cases in the field of medical technology, factory automation and other use cases are envisaged.

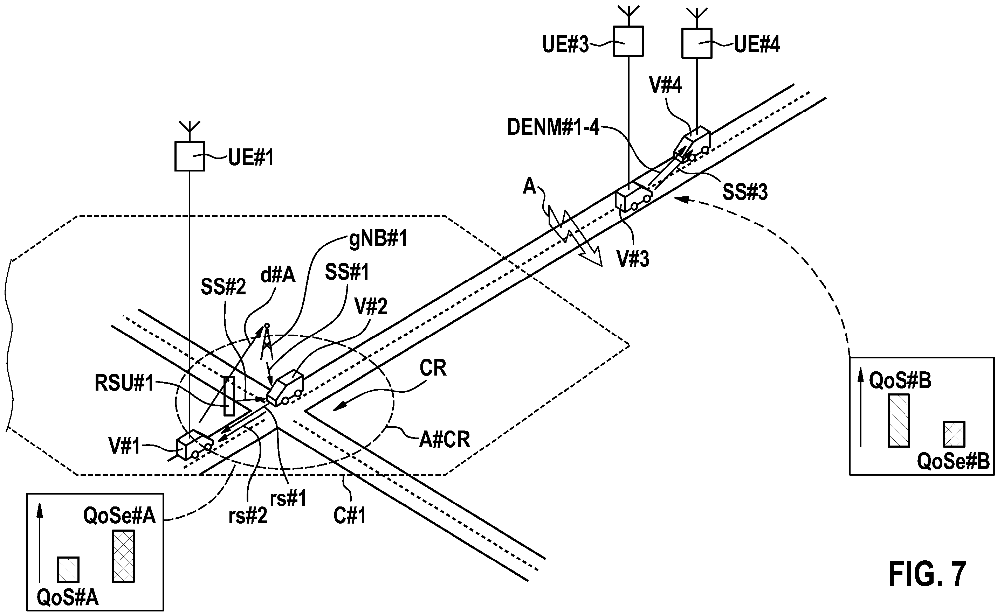

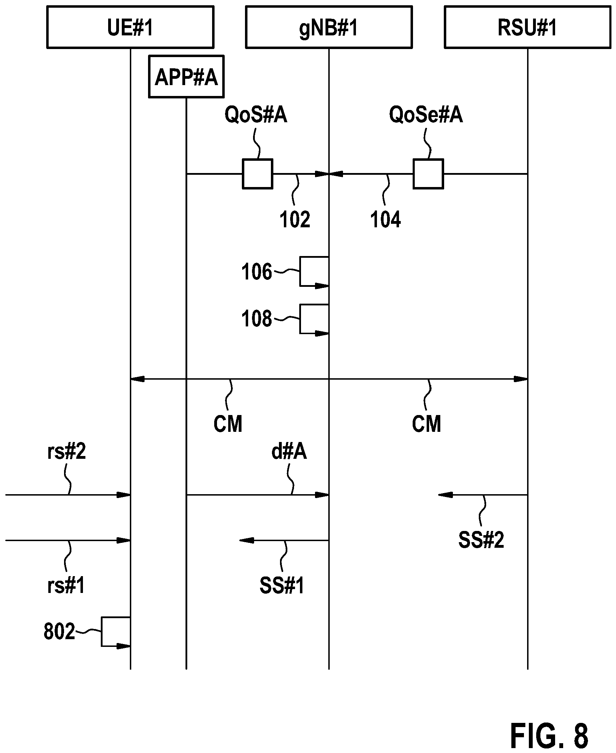

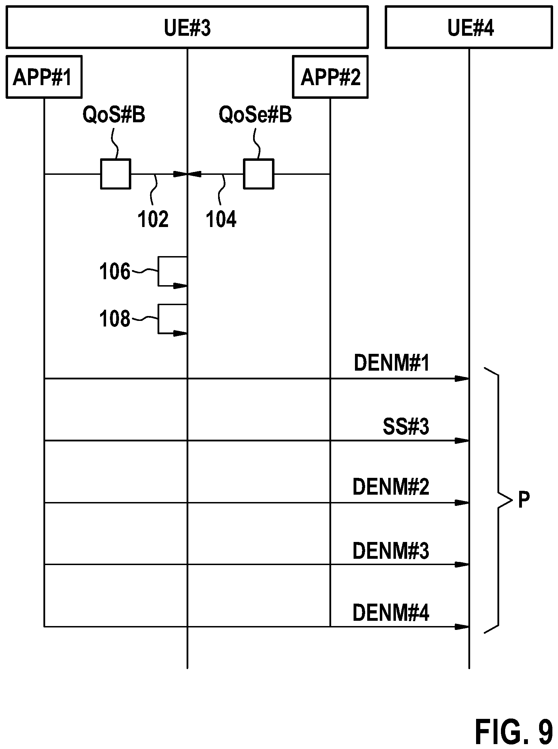

Figure 7 illustrates examples for applying the above-described methods. Figures 8 and 9 depict schematic sequence diagrams illustrating operations of the entities shown in Figure 7. In the following, reference is made to figures 7 to 9.

For example, a road-side unit RSU#1 is arranged in the vicinity of a road crossing CR. RSU#1 can be arranged at or being part of a road sign or of a traffic light. A vehicle V#1 heading towards the road crossing CR is equipped with a radio terminal UE#1, whereas another vehicle that has already entered the crossing CR is not equipped with a radio terminal. The radio access node gNB#1 governs radio communication within its cell C#1. That is, the radio resources for downlink, uplink and sidelink communication are scheduled by gNB#1.

According to the example of figure 8 and the road crossing example of figure 7, RSU#1 transmits a high QoSe#A to gNB#1 because a good sensing operation is of particular interest in cell C#1 or at least in an area A#CR around the road crossing CR. UE#1 is informed about the QoSe#A or is initiated via a separate message in order to enable sensing at the road crossing CR.

UE#1 wants to initiate a low priority data transmission of data d#A like a low priority video stream and transmits a corresponding low QoS#A to gNB#1.

gNB#1 monitors the requirements QoS#A, QoSe#B in steps 102, 104. gNB#1 configures in step 106 a radio channel and maps in step 108 the associated data flow and associated sensing function to the configured radio channel.

Information CM about the radio channel configuration and the mapping is transmitted to UE#1, RSU#1.

According to the example of figure 8, RSU#1 and gNB#1 transmit a respective sensing signal SS#1, SS#2. Each of the signals SS#1, SS#2 hit the vehicle V#2. The surface of the vehicle V#2 generates reflected or scattered signals rs#1, rs#2, which are received by UE#1. UE#1 or an associated entity can determine 802 the distance between the vehicles V#1 and V#2. The Sidelink Channel SLCH is seen as a physical channel from one UE directly to a second UE. The reflection of the sensing signals SS could be considered as another physical channel (SLBCH).

According to the example of figure 9 and the example of figure 7 with oncoming vehicles V#3 and V#4 on a country road, vehicle V#3 wants to inform vehicle V#4 about an hazardous road event like an accident A. In this case, there is no radio access node available and the communication between UE#3 and UE#4 associated with the respective vehicle V#3 and V#4 is established via a direct link radio channel between UE#3, UE#4, for example using a listen-before-talk access scheme. This communication is also referred to as the unmanaged mode.

In order to inform vehicle V#4 about the accident A, the requirement for data communication QoS#B is set by UE#3 to high and the requirement QoS#B for data communication to low. Accordingly, UE#3 allocates the radio resources of a sidelink channel prioritizing data traffic over sensing. By that, UE#3 is able to transmit DEMN#1 informing about the accident A with a higher repetition rate than the transmission of a sensing signal.

## Claims

1. A method comprising:

   monitoring (102) at least one data service quality requirement (QoS#1) that is associated with at least one data flow (d#1) for data communication;
   monitoring (104) at least one sensing quality requirement (QoSe#1) that is associated with at least one sensing function (s#1) for sensing of at least one physical environment parameter of a physical environment; and
   mapping (108) at least one of the data flow (d#1) associated with the at least one data service quality requirement (QoS#1) and the sensing function (s#1) associated with the at least one sensing quality requirement (QoSe#1) to at least one radio resource/channel/bearer (RCH#B, RCH#A) based on the monitored at least one data service quality requirement (QoS#1) and based on the monitored at least one sensing quality requirement (QoSe#1),
   **characterized by**
   determining (106) at least one configuration (c#A, c#B) of the at least one radio resource/channel/bearer (RCH#A, RCH#B) based on the monitored at least one data service quality requirement (QoS#1) and based on the monitored at least one sensing quality requirement (QoSe#1);
   wherein the determination (106) of the at least one configuration (c#A) comprises:

   determining (404) a plurality of radio resources/channels/bearers as part of the at least one configuration (c#A) for transporting sensing signals associated with the sensing function (s#1) based on a ratio (W_r); and
   determining (406), especially after determining (404) the plurality of radio resources/channels/bearers for transporting sensing signals, another plurality of radio resources/channels/bearers as part of the at least one configuration (c#A) for transporting data associated with the data flow (d#1).

2. The method according to the preceding claim, wherein the at least one configuration of the at least one radio channel comprises:
   a partitioned configuration (c#P), wherein a plurality of the allocated radio resources of the associated partitioned radio channel (RCH#P) are exclusively reserved for data transmission, and wherein another plurality of the allocated radio resources of the associated partitioned radio channel are exclusively reserved for the transport of sensing signals.

3. The method according to one of the preceding claims, wherein the at least one configuration of the at least one radio channel comprises:
   a data transport configuration (c#D), wherein a plurality of the allocated radio resources of the associated data transport radio channel (RCH#D) are exclusively reserved for data transmission, and wherein no radio resources of the associated data transport radio channel (RCH#D) are exclusively reserved for the transport of sensing signals.

4. The method according to one of the preceding claims, wherein the at least one configuration of the at least one radio channel comprises:
   a sensing transport configuration (c#S1, c#S2), wherein no radio resources of the associated sensing radio channel (RCH#S1, RCH#S2) are exclusively reserved for data transmission, and wherein a plurality of radio resources of the associated sensing radio channel (RCH#S1, RCH#S2) are exclusively reserved for the transport of sensing signals.

5. The method according to claims 3 and 4 comprising: selecting one frequency range (FR1) for the data transport radio channel (RCH#D) and the sensing radio channel (RCH#S1).

6. The method according to claims 3 and 4 comprising:

   selecting a first frequency range (FR1) for the data transport radio channel (RCH#D); and
   selecting a second frequency range (FR2) for the sensing radio channel (RCH#S2).

7. The method according to one of the preceding claims, wherein the method comprises:
   determining (402) the ratio (W_r) based on the at least one data service quality requirement (QoS#1) and based on the at least one sensing quality requirement (QoSe#1).

8. The method according to claim 1 comprising:
   obtaining (408) at least a part of the at least one configuration (c#A) from a look-up table (LUT) based on the determined ratio (W_r).

9. The method according to one of the preceding claims comprising:

   comparing (504) an amount of available radio resources with an expected amount of radio resources, which is based on the at least one data service quality requirement (QoS#1) and based on at least one sensing quality requirement (QoSe#1); and
   wherein the determination (106) of the at least one configuration of the at least one radio channel (RCH#A, RCH#B) is based on the comparison.

10. The method according to one of the preceding claims comprising:

    comparing (506) the at least one data service quality requirement (QoS#1) with the at least one sensing quality requirement (QoSe#1); and
    wherein the determination (106) of the at least one configuration of the at least one radio channel (RCH#A, RCH#B) is based on the comparison (506).

11. An apparatus (UE, gNB, CU) comprising:

    monitoring means (102) configured to monitor at least one data service quality requirement (QoS#1) that is associated with a data flow (d#1) for data communication;
    monitoring means (104) configured to monitor at least one sensing quality requirement (QoSe#1) that is associated with a sensing function (s#1) for sensing of at least one physical environment parameter of a physical environment; and
    mapping means (108) configured to map at least one of the data flow (d#1) associated with the at least one data service quality requirement (QoS#1) and the sensing function (s#1) associated with the at least one sensing quality requirement (QoSe#1) to at least one radio resource/channel/bearer (RCH#B, RCH#A) based on the monitored at least one data service quality requirement (QoS#1) and based on the monitored at least one sensing quality requirement (QoSe#1),
    **characterized by**
    determining means (106) configured to determine at least one configuration (c#A, c#B) of the at least one radio resource/channel/bearer (RCH#A, RCH#B) based on the monitored at least one data service quality requirement (QoS#1) and based on the monitored at least one sensing quality requirement (QoSe#1);
    wherein the determining means (106) of the at least one configuration (c#A) comprise:

       determining means (404) configured to determine a plurality of radio resources/channel/bearer as part of the at least one configuration (c#A) for transporting sensing signals associated with the sensing function (s#1) based on a ratio (W_r); and
       determining means (406) configured to, especially after determining (404) the plurality of radio resources/channels/bearers for transporting sensing signals, another plurality of radio resources/channels/bearers as part of the at least one configuration (c#A) for transporting data associated with the data flow (d#1).

**12.** The apparatus (UE, gNB) according to the preceding claim, wherein determining means (402) are configured to determine the ratio (W_r) based on the at least one data service quality requirement (QoS#1) and based on the at least one sensing quality requirement (QoSe#1).

**13.** The apparatus (UE, gNB) according to one of claims 11 or 12, adapted to conduct the method according to one of the claims 1 to 10.

**Patentansprüche**

**1.** Verfahren, das Folgendes umfasst:

Überwachen (102) mindestens einer Datendienstqualitätsanforderung (QoS#1), die mit mindestens einem Datenfluss (d#1) zur Datenkommunikation assoziiert ist;
Überwachen (104) mindestens einer Erfassungsqualitätsanforderung (Qo-Se#1), die mit mindestens einer Erfassungsfunktion (s#1) zum Erfassen mindestens eines physikalischen Umgebungsparameters einer physikalischen Umgebung assoziiert ist; und
Abbilden (108) mindestens eines aus dem Datenfluss (d#1), der mit der mindestens einen Datendienstqualitätsanforderung (QoS#1) assoziiert ist, und
der Erfassungsfunktion (s#1), die mit der mindestens einen Erfassungsqualitätsanforderung (QoSe#1) assoziiert ist, auf mindestens eine Funkressource/einen Funkkanal/Funkträger (RCH#B, RCH#A) basierend auf der überwachten mindestens einen Datendienstqualitätsanforderung (QoS#1) und mindestens einer Erfassungsqualitätsanforderung (QoSe#1),
**gekennzeichnet durch**
Bestimmen (106) mindestens einer Konfiguration (c#A, c#B) der mindestens einen Funkressource/des mindestens einen Funkkanals/Funkträgers (RCH#A, RCH#B) basierend auf der überwachten mindestens einen Datendienstqualitätsanforderung (QoS#1) und basierend auf der überwachten mindestens einen Erfassungsqualitätsanforderung (QoSe#1);
wobei die Bestimmung (106) der mindestens einen Konfiguration (c#A) Folgendes umfasst:

Bestimmen (404) einer Mehrzahl von Funkressourcen/Funkkanälen/Funkträgern als Teil der mindestens einen Konfiguration (c#A) zum Transportieren von Erfassungssignalen, die mit der Erfassungsfunktion (s#1) assoziiert sind, basierend auf einem Verhältnis (W_r); und
Bestimmen (406), insbesondere nach dem Bestimmen (404) der Mehrzahl von Funkressourcen/Funkkanälen/Funkträgern zum Transportieren von Erfassungssignalen, einer weiteren Mehrzahl von Funkressourcen/Funkkanälen/Funkträgern als Teil der mindestens einen Konfiguration (c#A) zum Transportieren von Daten, die mit dem Datenfluss (d#1) assoziiert sind.

**2.** Verfahren nach dem vorhergehenden Anspruch, wobei die mindestens eine Konfiguration des mindestens einen Funkkanals Folgendes umfasst:
eine partitionierte Konfiguration (c#P), wobei eine Mehrzahl der zugewiesenen Funkressourcen des assoziierten partitionierten Funkkanals (RCH#P) ausschließlich zur Datenübertragung reserviert sind und wobei eine weitere Mehrzahl von zugewiesenen Funkressourcen des assoziierten partitionierten Funkkanals ausschließlich für den Transport von Erfassungssignalen reserviert sind.

**3.** Verfahren nach einem der vorhergehenden Ansprüche, wobei die mindestens eine Konfiguration des mindestens einen Funkkanals Folgendes umfasst:
eine Datentransportkonfiguration (c#D), wobei eine Mehrzahl der zugewiesenen Funkressourcen des assoziierten Datentransportfunkkanals (RCH#D) ausschließlich für die Datenübertragung reserviert sind und wobei keine Funkressourcen des assoziierten Datentransportfunkkanals (RCH#D) ausschließlich für den Transport von Erfassungssignalen reserviert sind.

**4.** Verfahren nach einem der vorhergehenden Ansprüche, wobei die mindestens eine Konfiguration des mindestens einen Funkkanals Folgendes umfasst:
eine Erfassungstransportkonfiguration (c#S1, c#S2), wobei keine Funkressourcen des assoziierten Erfassungsfunkkanals (RCH#S1, RCH#S2) ausschließlich für die Datenübertragung reserviert sind, und wobei eine Mehrzahl von Funkressourcen des assoziierten Erfassungsfunkkanals (RCH#S1, RCH#S2) ausschließlich für den Transport von Erfassungssignalen reserviert sind.

5. Verfahren nach Anspruch 3 und 4, das Folgendes umfasst: Auswählen eines Frequenzbereichs (FR1) für den Datentransportfunkkanal (RCH#D) und den Erfassungsfunkkanal (RCH#S1).

6. Verfahren nach Anspruch 3 und 4, das Folgendes umfasst:

Auswählen eines ersten Frequenzbereichs (FR1) für den Datentransportfuncknal (RCH#D); und
Auswählen eines zweiten Frequenzbereichs (FR2) für den Erfassungsfunckanal (RCH#S2).

7. Verfahren nach einem der vorhergehenden Ansprüche, wobei das Verfahren Folgendes umfasst:
Bestimmen (402) des Verhältnisses (W_r) basierend auf der mindestens einen Datendienstqualitätsanforderung (QoS#1) und basierend auf der mindestens einen Erfassungsqualitätsanforderung (QoSe#1).

8. Verfahren nach Anspruch 1, das Folgendes umfasst:
Erhalten (408) mindestens eines Teils der mindestens einen Konfiguration (c#A) aus einer Nachschlagetabelle (LUT) basierend auf dem bestimmten Verhältnis (W_r).

9. Verfahren nach einem der vorhergehenden Ansprüche, das Folgendes umfasst:

Vergleichen (504) einer Menge verfügbarer Funkressourcen mit einer erwarteten Menge von Funkressourcen, die auf der mindestens einen Datendienstqualitätsanforderung (QoS#1) und auf mindestens einer Erfassungsqualitätsanforderung (QoSe#1) basiert; und
wobei die Bestimmung (106) der mindestens einen Konfiguration des mindestens einen Funkkanals (RCH#A, RCH#B) auf dem Vergleich basiert.

10. Verfahren nach einem der vorhergehenden Ansprüche, das Folgendes umfasst:

Vergleichen (506) der mindestens einen Datendienstqualitätsanforderung (QoS#1) mit der mindestens einen Erfassungsqualitätsanforderung (Qo-Se#1); und
wobei die Bestimmung (106) der mindestens einen Konfiguration des mindestens einen Funkkanals (RCH#A, RCH#B) auf dem Vergleich (506) basiert.

11. Vorrichtung (UE, gNB, CU), die Folgendes umfasst:

Überwachungsmittel (102), die dazu ausgelegt sind, mindestens eine Datendienstqualitätsanforderung (QoS#1) zu überwachen, die mit einem Datenfluss (d#1) zur Datenkommunikation assoziiert ist;
Überwachungsmittel (104), die dazu ausgelegt sind, mindestens eine Erfassungsqualitätsanforderung (QoSe#1) zu überwachen, die mit einer Erfassungsfunktion (s#1) zum Erfassen mindestens eines physikalischen Umgebungsparameters einer physikalischen Umgebung assoziiert ist; und
Abbildungsmittel (108), die dazu ausgelegt sind, den Datenfluss (d#1), der mit der mindestens einen Datendienstqualitätsanforderung (QoS#1) assoziiert ist, und/oder die Erfassungsfunktion (s#1), die mit der mindestens einen Erfassungsqualitätsanforderung (QoSe#1) assoziiert ist, auf mindestens eine Funkressource/einen Funkkanal/einen Funkträger (RCH#B, RCH#A) basierend auf der überwachten mindestens einen Datendienstqualitätsanforderung (QoS#1) und basierend auf der überwachten mindestens einen Erfassungsqualitätsanforderung (QoSe#1) abzubilden,
**gekennzeichnet durch**
Bestimmungsmittel (106), die dazu ausgelegt sind, mindestens eine Konfiguration (c#A, c#B) der mindestens einen Funkressource/des mindestens einen Funkkanals/Funkträgers (RCH#A, RCH#B) basierend auf der überwachten mindestens einen Datendienstqualitätsanforderung (QoS#1) und basierend auf der überwachten mindestens einen Erfassungsqualitätsanforderung (Qo-Se#1) zu bestimmen;
wobei die Bestimmungsmittel (106) der mindestens einen Konfiguration (c#A) Folgendes umfassen:

Bestimmungsmittel (404), die dazu ausgelegt sind, eine Mehrzahl von Funkressourcen/Funkkanälen/Funkträgern als Teil der mindestens einen Konfiguration (c#A) zum Transportieren von Erfassungssignalen, die mit der Erfassungsfunktion (s#1) assoziiert sind, basierend auf einem Verhältnis (W_r) zu bestimmen; und
ein Bestimmungsmittel (406), das dazu ausgelegt ist, insbesondere nach dem Bestimmen (404) der Mehrzahl von Funkressourcen/Funkkanälen/Funkträgern zum Transportieren von Erfassungssignalen eine weitere Mehrzahl von Funkressourcen/Funkkanälen/Funkträgern als Teil der mindestens einen Konfiguration (c#A) zum Transportieren von Daten, die mit dem Datenfluss (d#1) assoziiert sind.

**12.** Vorrichtung (UE, gNB) nach dem vorhergehenden Anspruch, wobei die Bestimmungsmittel (402) dazu ausgelegt sind, das Verhältnis (W_r) basierend auf der mindestens einen Datendienstqualitätsanforderung (QoS#1) und basierend auf der mindestens einen Erfassungsqualitätsanforderung (QoSe#1) zu bestimmen.

**13.** Vorrichtung (UE, gNB) nach einem der Ansprüche 11 oder 12, die dazu ausgelegt ist, das Verfahren nach einem der Ansprüche 1 bis 10 durchzuführen.


**Revendications**

**1.** Procédé comportant les étapes consistant à :

surveiller (102) au moins une exigence de qualité de service de données (QoS#1) qui est associée à au moins un flux de données (d#1) servant à la communication de données ;
surveiller (104) au moins une exigence de qualité de détection (QoSe#1) qui est associée à au moins une fonction de détection (s#1) pour la détection d'au moins un paramètre d'environnement physique d'un environnement physique ; et
mettre en correspondance (108) le flux de données (d#1) associé à l'exigence ou aux exigences de qualité de service de données (QoS#1) et/ou la fonction de détection (s#1) associée à l'exigence ou aux exigences de qualité de détection (QoSe#1) avec au moins un(e) ressource/canal/support radio (RCH#B, RCH#A) sur la base de l'exigence ou des exigences surveillées de qualité de service de données (QoS#1) et sur la base de l'exigence ou des exigences surveillées de qualité de détection (QoSe#1),
**caractérisé par** les étapes consistant à
déterminer (106) au moins une configuration (c#A, c#B) de la/du ou des ressources/canaux/supports radio (RCH#A, RCH#B) sur la base de l'exigence ou des exigences surveillées de qualité de service de données (QoS#1) et
sur la base de l'exigence ou des exigences surveillées de qualité de détection (QoSe#1) ;
la détermination (106) de la ou des configurations (c#A) comportant :

la détermination (404) d'une pluralité de ressources/canaux/supports radio dans le cadre de la ou des configurations (c#A) pour transporter des signaux de détection associés à la fonction de détection (s#1) sur la base d'un rapport (W_r) ; et
la détermination (406), en particulier après avoir déterminé (404) la pluralité de ressources/canaux/supports radio pour transporter des signaux de détection, d'une autre pluralité de ressources/canaux/supports radio dans le cadre de la ou des configurations (c#A) pour transporter des données associées au flux de données (d#1).

**2.** Procédé selon la revendication précédente, la ou les configurations du canal ou des canaux radio comportant :
une configuration partitionnée (c#P), dans laquelle une pluralité des ressources radio attribuées du canal radio partitionné associé (RCH#P) est exclusivement réservée à la transmission de données, et dans laquelle une autre pluralité des ressources radio attribuées du canal radio partitionné associé est exclusivement réservée au transport de signaux de détection.

**3.** Procédé selon une des revendications précédentes, la ou les configurations du canal ou des canaux radio comportant :
une configuration de transport de données (c#D), dans laquelle une pluralité des ressources radio attribuées du canal radio de transport de données associé (RCH#D) est exclusivement réservée à la transmission de données, et dans laquelle aucune ressource radio du canal radio de transport de données associé (RCH#D) n'est exclusivement réservée au transport de signaux de détection.

**4.** Procédé selon une des revendications précédentes, la ou les configurations du canal ou des canaux radio comportant :

une configuration de transport de détection (c#S1, c#S2), dans laquelle aucune ressource radio du canal radio de détection associé (RCH#S1, RCH#S2) n'est exclusivement réservée à la transmission de données, et
dans laquelle une pluralité de ressources radio du canal radio de détection associé (RCH#S1, RCH#S2) est exclusivement réservée au transport de signaux de détection.

5. Procédé selon les revendications 3 et 4 comportant : la sélection d'une plage de fréquences (FR1) pour le canal radio de transport de données (RCH#D) et le canal radio de détection (RCH#S1).

6. Procédé selon les revendications 3 et 4 comportant :

   la sélection d'une première plage de fréquences (FR1) pour le canal radio de transport de données (RCH#D) ; et
   la sélection d'une seconde plage de fréquences (FR2) pour le canal radio de détection (RCH#S2).

7. Procédé selon une des revendications précédentes, le procédé comportant : la détermination (402) du rapport (W_r) sur la base de l'exigence ou des exigences de qualité de service de données (QoS#1) et sur la base de l'exigence ou des exigences de qualité de détection (QoSe#1).

8. Procédé selon la revendication 1 comportant :
   l'obtention (408) d'au moins une partie de la ou des configurations (c#A) à partir d'une table de consultation (LUT) d'après le rapport déterminé (W_r).

9. Procédé selon une des revendications précédentes comportant :

   la comparaison (504) d'une quantité de ressources radio disponibles avec une quantité prévue de ressources radio, qui est basée sur l'exigence ou les exigences de qualité de service de données (QoS#1) et basée sur au moins une exigence de qualité de détection (QoSe#1) ; et
   la détermination (106) de la ou des configurations du canal ou des canaux radio (RCH#A, RCH#B) étant basée sur la comparaison.

10. Procédé selon une des revendications précédentes comportant :

    la comparaison (506) de l'exigence ou des exigences de qualité de service de données (QoS#1) avec l'exigence ou les exigences de qualité de détection (QoSe#1) ; et
    la détermination (106) de la ou des configurations du canal ou des canaux radio (RCH#A, RCH#B) étant basée sur la comparaison (506).

11. Appareil (UE, gNB, CU) comportant :

    des moyens (102) de surveillance configurés pour surveiller au moins une exigence de qualité de service de données (QoS#1) qui est associée à un flux de données (d#1) servant à la communication de données ;
    des moyens (104) de surveillance configurés pour surveiller au moins une exigence de qualité de détection (QoSe#1) qui est associée à une fonction de détection (s#1) pour la détection d'au moins un paramètre d'environnement physique d'un environnement physique ; et
    des moyens (108) de mise en correspondance configurés pour mettre en correspondance le flux de données (d#1) associé à l'exigence ou aux exigences de qualité de service de données (QoS#1) et/ou la fonction de détection (s#1) associé à l'exigence ou aux exigences de qualité de détection (QoSe#1) avec au moins un(e) ressource/canal/support radio (RCH#B, RCH#A) sur la base de l'exigence ou des exigences surveillées de qualité de service de données (QoS#1) et sur la base de l'exigence ou des exigences surveillées de qualité de détection (QoSe#1),
    **caractérisé par**
    des moyens (106) de détermination configurés pour déterminer au moins une configuration (c#A, c#B) de la/du ou des ressources/canaux/supports radio (RCH#A, RCH#B) sur la base de l'exigence ou des exigences surveillées de qualité de service de données (QoS#1) et sur la base de l'exigence ou des exigences surveillées de qualité de détection (QoSe#1) ;
    les moyens (106) de détermination de la ou des configurations (c#A) comportant :

       des moyens (404) de détermination configurés pour déterminer une pluralité de ressources/canaux/supports radio dans le cadre de la ou des configurations (c#A) pour transporter des signaux de détection associés à la fonction de détection (s#1) sur la base d'un rapport (W_r) ; et
       des moyens (406) de détermination configurés pour, en particulier après avoir déterminé (404) la pluralité de ressources/canaux/supports radio pour transporter des signaux de détection, une autre pluralité de ressources/canaux/supports radio dans le cadre de la ou des configurations (c#A) pour transporter des données associées au flux de données (d#1).

**12.** Appareil (UE, gNB) selon la revendication précédente, des moyens (402) de détermination étant configurés pour déterminer le rapport (W_r) sur la base de l'exigence ou des exigences de qualité de service de données (QoS#1) et sur la base de l'exigence ou des exigences de qualité de détection (QoSe#1).

**13.** Appareil (UE, gNB) selon une des revendications 11 ou 12, adapté pour réaliser le procédé selon une des revendications 1 à 10.

EP 4 266 791 B1

FIG. 1

FIG. 2

FIG. 3

EP 4 266 791 B1

LUT

106 408

QoS#1 402

404

Wr 406

QoSe#1 c#A

**FIG. 4**

UE,gNB

**502**

Number of
Bearers > 0 ?  —N→ ⊙

**504**

Available
Resources
per Bearer >
Requested Resources
for QoS
and QoSe
?  —N→

**506**

QoSe > QoS?  —N→

**106**

Y

Multiplex Data Flow and
Sensing Request

**508**

**510**

Y

Block Data Flow on
this Bearer

**512**

Block Sensing Request
on this Bearer?

**FIG. 5**

Radar @ f1

V2V sidelink comm. @ f2

time / frequency / code

Joint comm. and radar

time / frequency / code

EP 4 266 791 B1

FIG. 6

FIG. 7

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021076367 A1
- WO 2020033226 A1
- US 2021410129 A1